# FASCICULE DE BREVET EUROPEEN

(11) **EP 0 988 461 B1**
(45) Date de publication et mention de la délivrance du brevet: **13.11.2002**
(21) Numéro de dépôt: 98932239.1
(22) Date de dépôt: 19.06.1998
(51) Int. Cl.: F16D 23/06

(54) **DISPOSITIF DE SYNCHRONISATION POUR BOITE DE VITESSES MECANIQUE**
SYNCHRONISIERVORRICHTUNG FÜR MECHANISCHE GETRIEBESCHALTUNG
MECHANICAL GEAR BOX SYNCHRONISING DEVICE

(30) Priorité: 20.06.1997 FR 9707705
(43) Date de publication de la demande: 29.03.2000
(73) Titulaire: Renault s.a.s., 92100 Boulogne Billancourt (FR)
(72) Inventeur: LOSQ, Robert, F-78310 Maurepas (FR); RAOUL, Michel, F-78990 Elancourt (FR)
(86) Numéro de dépôt international: FR9801290
(87) Numéro de publication internationale: WO98059181

(56) Documents cités:
- WO-A-85/01998
- US-A- 1 768 856
- US-A- 1 853 988
- US-A- 1 967 065
- US-A- 3 386 302
- US-A- 5 105 927
- PATENT ABSTRACTS OF JAPAN vol. 12, no. 137 (M-690), 26 avril 1988 & JP 62 258243 A (NISSAN), 10 novembre 1987

## Description

La présente invention se rapporte aux synchroniseurs de boîtes de vitesses mécaniques.

Plus précisément, elle concerne un synchroniseur du type comportant un moyeu fixé sur un arbre d'entraînement de la boîte, un baladeur entraîné en rotation par le moyeu et déplaçable axialement sur celui-ci, et au moins un anneau de synchronisation entraîné en rotation par le moyeu et repoussé axialement par le baladeur en direction d'un pignon fou pour égaliser par frottement la vitesse de ce dernier avec celle de l'arbre d'entraînement avant l'engagement d'une vitesse.

La fonction essentielle d'un synchroniseur de boîte de vitesses mécanique est d'égaliser par frottement les vitesses d'un arbre de la boîte, avec celle d'un pignon tournant fou autour de celui-ci, avant de prendre en charge la transmission du couple de l'arbre sur le pignon.

Selon l'état de la technique connue, illustré notamment par la publication EP 0515 243, les synchroniseurs comportent généralement un manchon baladeur, se déplaçant sous la commande d'une fourchette le long d'un moyeu claveté sur un arbre de la boîte, de façon à venir craboter la denture d'un pignon fou, après avoir rencontré celle d'un anneau de synchronisation.

Dans ce type de synchroniseur, le baladeur est donc muni de dents, intervenant d'abord en rencontrant la denture d'un anneau de synchronisation pour repousser celui-ci contre le pignon, puis en rencontrant la denture du pignon fou, pour transmettre le couple sur celui-ci. Entre la synchronisation et le crabotage, le baladeur se déplace sur une course d'environ 18 millimètres, au cours de laquelle il n'exerce plus sa poussée sur l'anneau, de sorte que ce dernier se dégage du pignon contre lequel il était précédemment plaqué, et que les vitesses du baladeur et du pignon ne sont plus égales lors de leur rencontre.

Ces dispositifs de synchronisation connus souffrent de coûts de fabrication élevés, liés notamment à l'usinage et à la finition des dentures de baladeur, d'anneau de synchronisation, et de pignon fou. Par ailleurs, la longueur totale réservée sur l'arbre primaire au déplacement des baladeurs pour la synchronisation de toutes les vitesses ne trouve aucune autre justification dans l'architecture de la boîte. On peut donc considérer qu'elle se retrouve dans celle de l'arbre primaire, et intervient ainsi directement dans l'encombrement axial de la boîte. Enfin, le crabotage est à l'origine d'une certaine résistance, voire de craquements dans la commande de passage des vitesses, qui sont critiqués par les utilisateurs.

La présente invention vise à simplifier les composants d'un synchroniseur de boîte de vitesses mécanique de type connu.

Elle propose dans ce but, que chaque anneau transforme le mouvement de rotation reçu du moyeu en poussée axiale contre un pignon, de façon à transmettre lui-même le couple moteur à ce pignon en exerçant sur celui-ci une pression constante.

Cette mesure permet notamment de réduire l'encombrement axial de la boîte, tout en améliorant le confort des passages de vitesses.

Selon une autre caractéristique de l'invention, chaque anneau de synchronisation présente plusieurs éléments d'appui faisant face au moyeu, de façon à recevoir de celui-ci le mouvement, et à le transformer partiellement en poussée axiale sur le pignon.

De préférence, les éléments d'appui de chaque anneau présentent des surfaces, dont l'inclinaison par rapport à la direction axiale du dispositif détermine le taux de transformation du couple, en poussée axiale sur le pignon.

D'autres caractéristiques et avantages de la présente invention apparaîtront clairement à la lecture de la description suivante d'un mode de réalisation particulier de celle-ci, en se reportant aux dessins annexés, sur lesquels :

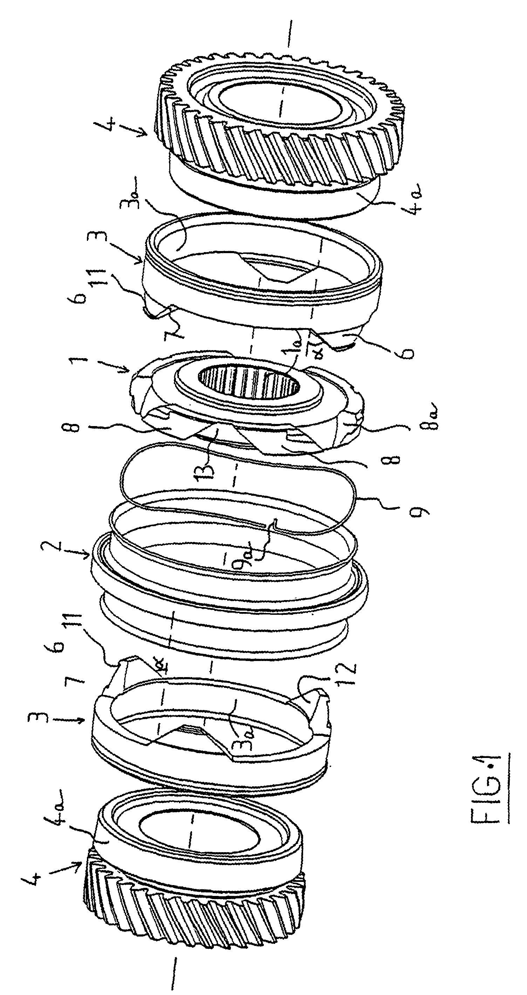

- la figure 1 représente les différents éléments constitutifs de l'invention avant assemblage, et
- la figure 2 est une coupe transversale partielle du dispositif proposé.

Le dispositif de synchronisation 1 illustré par la figure comporte un moyeu 1, immobilisé en rotation sur un arbre primaire (non représenté) de boîte de vitesses par ses cannelures intérieures 1a. Le moyeu 1 coopère avec un baladeur 2, capable de se déplacer axialement sur celui-ci, sous le contrôle d'une fourchette de passage de vitesses (également non représentée). En se déplaçant, le baladeur 2 repousse l'un ou l'autre de deux anneaux de synchronisation 3 axialement sur l'arbre, en direction des pignons de vitesse 4, tournant fou autour de celui-ci.

De façon classique, chaque anneau 3 comporte une surface conique de frottement 3a, rencontrant une surface complémentaire de frottement 4a d'un pignon 4, de façon à assurer la synchronisation de ce dernier avec l'arbre primaire, sous la poussée du baladeur 2.

Conformément à l'invention, chaque anneau 3 présente plusieurs éléments d'appui 6 (trois dans l'exemple de réalisation non limitatif illustré par la figure. Les éléments d'appui 6 font face au moyeu 1. Chacun d'eux présente une surface conique 12 assurant le centrage de l'anneau au repos, et des surfaces d'appui 7 coopérant avec des éléments de transfert 8, qui appartiennent au moyeu 1, et sont disposés de part et d'autre de celui-ci. Comme indiqué sur le schéma, les éléments d'appui 6 peuvent avantageusement avoir une forme trapézoïdale. Dans ce cas, les découpes 13 du moyeu coopérant avec les éléments d'appui 6 de chaque anneau 3 sont également trapézoïdales.

La figure fait également apparaître un jonc élastique 9 de forme ondulée. Le jonc 9 coopère avec les éléments d'appui 6 de chaque anneau 3, et avec les éléments de transfert 8 du moyeu 1, de façon à rappeler élastiquement les deux anneaux 3 contre celui-ci. Il s'appuie pour cela en plusieurs points sur chaque anneau 3 (trois dans l'exemple représenté). De préférence, le jonc 9 est replié à l'une de ses extrémités 9a, de façon à pouvoir être indexé angulairement sur le moyeu 1. Enfin, les éléments d'appui 6 de chaque anneau 3 présentent une gorge annulaire 11, destinée à retenir le jonc 9 sur celui-ci.

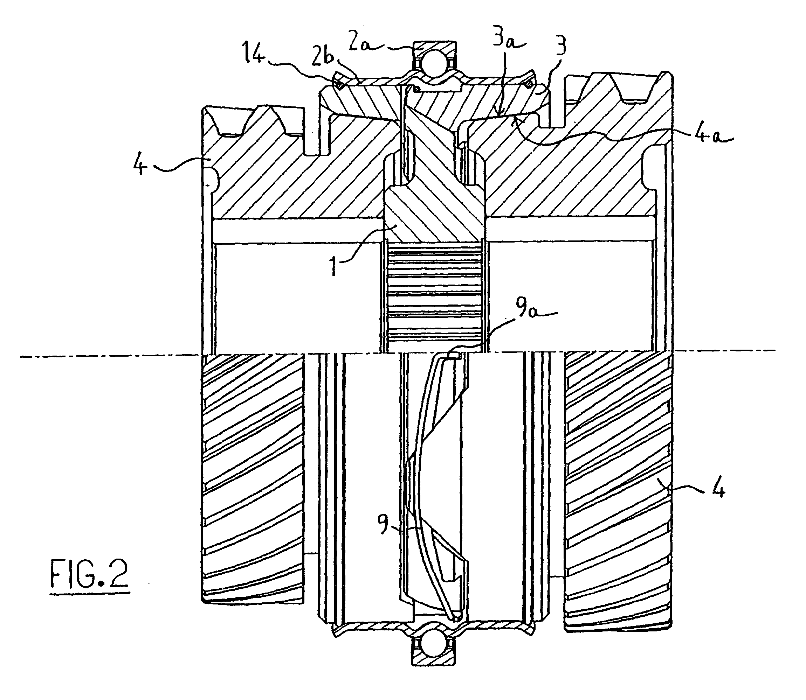

Le fonctionnement de ce dispositif est le suivant. Sous la poussée axiale d'une fourchette de passage de vitesse, sur la bague extérieure 2a (cf figure 2) du baladeur 2, la bague intérieure 2b de celui-ci repousse un anneau de synchronisation 3 en direction d'un pignon 4 par l'intermédiaire d'un collier torique 14. La mise en contact d'un anneau 3 avec un pignon 4 par leurs surfaces coniques de frottement 4a et 3a, entraîne l'anneau 3 en rotation. Celui-ci prend alors appui sur le moyeu 1, au niveau des flancs inclinés 8a des éléments de transfert 8 du moyeu 1. Cet appui a pour effet de multiplier la poussée axiale constante de la fourchette, et de générer au niveau de la surface conique 4a du pignon 4 sollicité, d'une part un couple de frottement capable d'égaliser les vitesses de rotation du moyeu 14 et du pignon 4, et d'autre part un couple d'adhérence entre l'anneau et le pignon, suffisant pour transmettre le couple du moteur.

Conformément à l'invention, chaque anneau 3 transforme donc le couple reçu du moyeu 1 en poussée axiale sur un pignon 4. Il est ainsi capable de transmettre lui-même le couple moteur à ce pignon 4 en exerçant sur celui-ci une pression constante. Grâce à leur disposition vis à vis du moyeu, les éléments d'appui 6 de chaque anneau 3 reçoivent du moyeu 1 le couple, de façon à le transformer partiellement en poussée axiale sur un pignon 4. L'inclinaison α des surfaces d'appui 7 des éléments 6 par rapport à la direction axiale du dispositif détermine ainsi le taux de transformation du couple, en poussée axiale sur le pignon 4.

Enfin, à l'état de repos, les anneaux 3 sont rappelés par le jonc 9 en direction du moyeu 1, de manière à maintenir les anneaux 3 à l'écart des pignons fous 4, et à éviter les risques de traînée et de mauvais rendement de la boîte, pouvant en résulter.

Les avantages du dispositif de synchronisation proposés par l'invention sont nombreux. Parmi ceux-ci, on peut citer :
- la suppression de plusieurs phases du changement de rapport («dévirage», «vol libre» et «crabotage»),
- la réduction de la course de passage,
- la réduction de l'encombrement axial de la boîte de vitesses, et
- l'augmentation du confort des passages de vitesse, par uniformisation et diminution et des efforts nécessaires, par suppression des effets de «mur», ainsi que des craquements et des risques d'échappement de vitesse.

## Revendications

1. Dispositif de synchronisation pour boîte de vitesses mécanique, comportant un moyeu (1) fixé sur un arbre d'entraînement du dispositif, un baladeur (2) entraîné en rotation par le moyeu (1) et déplaçable axialement sur celui-ci, et au moins un anneau de synchronisation (3) entraîné en rotation par le moyeu (1) et repoussé axialement par le baladeur (2) en direction d'un pignon de vitesse tournant fou (4) pour égaliser par frottement la vitesse de ce dernier avec celle de l'arbre d'entraînement avant l'engagement d'une vitesse, **caractérisé en ce que** chaque anneau (3) transforme le couple reçu du moyeu (1) en poussée axiale contre un pignon (4), de façon à transmettre lui-même le couple moteur à ce pignon (4) en exerçant sur celui-ci une pression constante.

2. Dispositif de synchronisation selon la revendication 1, **caractérisé en ce que** chaque anneau (3) présente plusieurs éléments d'appui (6) faisant face au moyeu (1), de façon à recevoir de celui-ci le couple, et à le transformer partiellement en poussée axiale sur le pignon (4).

3. Dispositif de synchronisation selon la revendication 2, **caractérisé en ce que** les éléments d'appui (6) présentent des surfaces d'appui (7), dont l'inclinaison par rapport à la direction axiale du dispositif détermine le taux de transformation du couple, en poussée axiale sur le pignon (4).

4. Dispositif de synchronisation selon la revendication 3, **caractérisé en ce que** les éléments d'appui (6) ont une forme trapézoïdale.

5. Dispositif de synchronisation selon la revendication 2, 3 ou 4, **caractérisé en ce que** le moyeu (1) présente des éléments de transfert (8), coopérant avec les éléments d'appui (6) de deux anneaux de synchronisation (3), disposés de part et d'autre de celui-ci.

6. Dispositif de synchronisation selon la revendication 5, **caractérisé en ce que** les deux anneaux (3) sont rappelés élastiquement en direction du moyeu (1) par un jonc commun (9), coopérant avec les éléments d'appui (6) de chaque anneau (3) et les éléments de transfert (8) du moyeu (1).

7. Dispositif de synchronisation selon la revendication 6, **caractérisé en ce que** le jonc (9) a une forme ondulée, et prend appui en plusieurs points sur chaque anneau (3).

8. Dispositif de synchronisation selon la revendication 7, **caractérisé en ce que** le jonc (9) s'appuie en trois points sur chaque anneau (3), et est replié à une de ses extrémité (9a), de façon à être indexé angulairement sur le moyeu (1).

9. Dispositif de synchronisation selon la revendication 6, 7 ou 8, **caractérisé en ce que** les éléments d'appui (6) de chaque anneau (3) présentent une gorge annulaire (11), destinée à retenir le jonc (9).

10. Dispositif de synchronisation selon l'une des revendications précédentes, **caractérisé en ce que** les éléments d'appui (6) présentent une surface conique (12) de centrage de l'anneau (3) au repos.

11. Dispositif de synchronisation selon l'une des revendications 2 à 10, **caractérisé en ce que** le moyeu (1) présente des découpes trapézoïdales (13), coopérant avec les éléments d'appui (6) de chaque anneau (3).

## Patentansprüche

1. Anordnung zur Synchronisierung eines mechanischen Getriebes, mit einer auf einer Antriebswelle der Anordnung befestigten Nabe (1), mit einem Schubglied (2), das durch die Nabe (1) in Drehungen versetzt wird und axial auf ihr verschiebbar ist und mit mindestens einem Synchronisierring (3), der durch die Nabe (1) in Drehungen versetzt wird und in Axialrichtung vom Schubglied (2) in Richtung zu einem frei drehenden Gangritzel (4) verschoben wird um durch Reibung die Geschwindigkeit des letzteren an diejenige der Antriebswelle vor dem Einlegen eines Ganges anzugleichen, **dadurch gekennzeichnet, dass** jeder Ring (3) das ihm von der Nabe (1 übertragene Moment in axiale Druckkraft für ein Ritzel (4) derart umwandelt, dass diese selbst dem Ritzel (4) das Motormoment überträgt durch Ausüben eines konstanten Drucks auf dieses.

2. Anordnung zur Synchronisierung nach Anspruch 1, **dadurch gekennzeichnet, dass** jeder Ring (3) mehrere Stützteile (6) aufweist, die der Nabe (1) gegenüberliegen, sodass das Moment von ihr übertragen und teilweise in eine axiale Andruckkraft für das Ritzel (4) umgewandelt wird.

3. Anordnung zur Synchronisierung nach Anspruch 2, **dadurch gekennzeichnet, dass** die Stützteile (6) Stützflächen (7) aufweisen, deren Neigung bezüglich der Längsrichtung der Anordnung den Umwandlungsgrad des Momentes in axiale Andruckkraft für das Ritzel (4) bestimmt.

4. Anordnung zur Synchronisierung nach Anspruch 3, **dadurch gekennzeichnet, dass** die Stützteile (6) eine trapezförmige Gestalt aufweisen.

5. Anordnung nach Ansprüchen 2, 3 oder 4, **dadurch gekennzeichnet, dass** die Nabe (1) Übertragungsteile (8) aufweist, die mit den Stützteilen (6) der beiden Synchronisierringe (3) zusammenwirken, die beidseits von ihm angeordnet sind.

6. Anordnung zur Synchronisierung nach Anspruch 5, **dadurch gekennzeichnet, dass** die beiden Ringe (3) elastisch in Richtung zur Nabe (1) hin durch einen gemeinsamen Sprengring (9) beaufschlagt werden, der mit den Stützteilen (6) eines jeden Ringes (3) und den Übertragungsteilen (8) der Nabe (1) zusammenwirkt.

7. Anordnung zur Synchronisierung nach Anspruch 6, **dadurch gekennzeichnet, dass** der Sprengring (9) eine gewellte Form aufweist und sich an mehreren Stellen eines jeden Ringes (3) abstützt.

8. Anordnung zur Synchronisierung nach Anspruch 7, **dadurch gekennzeichnet, dass** der Sprengring (9) sich an drei Stellen eines jeden Ringes (3) abstützt und an einem seiner Enden (9a) umgebogen ist, sodass er winkelmässig zur Nabe (1) markiert ist.

9. Anordnung zur Synchronisierung nach Anspruch 6, 7 oder 8, **dadurch gekennzeichnet, dass** die Stützteile (6) eines jeden Ringes (3) eine ringförmige Nut (11) aufweisen zur Aufnahme des Sprengringes (9).

10. Anordnung zur Synchronisierung nach einem der vorhergehenden Ansprüche, **dadurch gekennzeichnet, dass** die Stützteile (6) eine konische Fläche (12) zur Zentrierung des Ringes (3) in der Ruhestellung aufweisen.

11. Anordnung zur Synchronisierung nach einem der Ansprüche 2 bis 10, **dadurch gekennzeichnet, dass** die Nabe (1) trapezförmige Ausschnitte (13) aufweist, die mit den Stützteilen (6) eines jeden Ringes (3) zusammenwirken.

## Claims

1. Synchronising device for a mechanical gearbox, comprising a hub (1) fixed onto a transmission shaft of the device, a sliding gear (2) driven in a rotational manner by the hub (1) and axially displaceable thereupon, and at least one synchronising ring (3) driven in a rotational manner by the hub (1) and pushed back axially by the sliding gear (2) in the direction of an idling gear (4) in order, by means of friction, to equalise the speed of said idling gear with that of the transmission shaft before a gear is engaged, **characterised in that** each ring (3) transforms the torque received from the hub (1) into axial pushing movement against a gear (4), such that the ring itself transfers the engine torque to said gear (4) while exerting a constant pressure upon it.

2. Synchronising device according to claim I, **characterised in that** each ring (3) has several bearing elements (6) facing the hub (1) such as to take up torque therefrom, and to partially transfer this into an axial pushing movement against the gear (4).

3. Synchronising device according to claim 2, **characterised in that** the bearing elements (6) have bearing surfaces (7) the inclination of which, with respect to the axial direction of the device, determines the amount of torque transferred into axial pushing movement against the gear (4).

4. Synchronising device according to claim 3, **characterised in that** the bearing elements (6) are trapezoidal in shape.

5. Synchronising device according to claim 2, 3 or 4, **characterised in that** the hub (1) has transfer elements (8) cooperating with the bearing elements (6) of two synchronising rings (3) arranged on either side thereof.

6. Synchronising device according to claim 5, **characterised in that** the two rings (3) are pulled back elastically in the direction of the hub (1) by a common retaining ring (9) cooperating with the bearing elements (6) of each ring (3) and the transfer elements (8) of the hub (1).

7. Synchronising device according to claim 6, **characterised in that** the retaining ring (9) is undulating in shape and bears upon several points on each ring (3).

8. Synchronising device according to claim 7, **characterised in that** the retaining ring (9) bears upon each ring (3) at three points, and is folded back at one of its extremities (9a) such as to be able to be indexed in terms of its angle upon the hub (1).

9. Synchronising device according to claim 6, 7 or 8, **characterised in that** the bearing elements (6) of each ring (30 have an annular throat (11) intended to retain to retaining ring (9).

10. Synchronising device according to one of the preceding claims, **characterised in that** the bearing elements (6) have a conical surface (12) for centring the ring (3) at rest.

11. Synchronising device according to one of claims 2 to 20, **characterised in that** the hub (1) has trapezoidal notches (13) cooperating with the bearing elements (6) of each ring (3).
